# EUROPEAN PATENT APPLICATION

(11) **EP 4 697 825 A1**
(43) Date of publication of application: **18.02.2026**
(21) Application number: 24806303.4
(22) Date of filing: 23.04.2024
(51) Int. Cl.: H04W 72/00, H04W 72/1268, H04W 72/1273

(54) **MESSAGE SCHEDULING METHOD AND APPARATUS**

(30) Priority: 12.05.2023 CN 202310541365
(71) Applicant: Huawei Technologies Co., Ltd., Shenzhen, Guangdong 518129 (CN)
(72) Inventor: SUN, Huan, Shenzhen, Guangdong 518129 (CN); LUO, Zhihu, Shenzhen, Guangdong 518129 (CN)
(74) Representative: Gill Jennings & Every LLP
(86) International application number: PCT/CN2024/089368
(87) International publication number: WO 2024/234947

(57) **Abstract**

This application provides a message scheduling method and an apparatus. The method includes: determining a target time domain resource allocation set, where the target time domain resource allocation set is a first time domain resource allocation set or a second time domain resource allocation set; receiving a first message, where the first message indicates a first parameter, the first parameter is for determining an interval between the first message and a second message in time domain, and the first parameter is a parameter in the target time domain resource allocation set; and sending the second message based on the first parameter. According to the method provided in this application, there are a plurality of time domain resource allocation sets, so that different time domain resource allocation sets are used under different conditions. In this way, different types of terminal devices can be scheduled, so that each type of terminal device can process a scheduling message and send a scheduled message in a timely manner, to improve network scheduling flexibility.

## Description

### CROSS-REFERENCE TO RELATED APPLICATIONS

This application claims priority to Chinese Patent Application No. 202310541365.4, filed with the China National Intellectual Property Administration on May 12, 2023 and entitled "MESSAGE SCHEDULING METHOD AND APPARATUS", which is incorporated herein by reference in its entirety.

### TECHNICAL FIELD

This application relates to the field of communication technologies, and in particular, to a message scheduling method and an apparatus.

### BACKGROUND

With evolution of mobile communication technologies, a plurality of types of terminal devices are defined. Different types of terminal devices have different capabilities. For example, in a new radio (new radio, NR) system, a release 18 (release 18, Rel 18) enhanced reduced capability (enhanced reduced capability, eRedCap) terminal device is newly defined. Compared with a legacy terminal device, the Rel 18 eRedCap terminal device supports a smaller radio frequency bandwidth, a lower peak rate, or the like.

In a 3^{rd} generation partnership project (3^{rd} generation partnership project, 3GPP) mobile communication network, a resource used for data transmission of a terminal device is scheduled by a base station. For example, in a random access phase, after receiving a random access response (random access response, RAR) from the base station, the terminal device sends a message 3 to the base station. When scheduling the message 3, the base station may include a row index (roll index) in an RAR uplink grant (uplink grant). The row index corresponds to parameters such as a slot offset and a start symbol in a time domain resource allocation (time domain resource allocation, TDRA) table. The terminal device may determine, based on the row index, information such as a slot in which the message 3 is located and a quantity of occupied symbols. When scheduling the message 3, the base station considers time needed by the terminal device to process the RAR. In this way, an interval between the scheduled message 3 and the RAR is greater than the time needed by the terminal device to process the RAR.

However, because a processing capability of the Rel 18 eRedCap terminal device is weak, time needed by the terminal device to process a message is increased. A current TDRA table is designed for a terminal device such as a legacy terminal device or a Rel 17 RedCap terminal device. Therefore, if the TDRA table is directly used, when the base station schedules the terminal device to perform data transmission, the Rel 18 eRedCap terminal device may need to send an uplink message before completing processing a received message. Consequently, the Rel 18 eRedCap terminal device cannot perform uplink transmission based on scheduling.

### SUMMARY

This application provides a message scheduling method and an apparatus, to schedule a plurality of types of terminal devices.

According to a first aspect, this application provides a message scheduling method. The method is performed by a terminal device or a module or a chip in the terminal device. The method includes: determining a target time domain resource allocation set, where the target time domain resource allocation set is a first time domain resource allocation set or a second time domain resource allocation set; receiving a first message, where the first message indicates a first parameter, the first parameter is for determining an interval between the first message and a second message in time domain, and the first parameter is a parameter in the target time domain resource allocation set; and sending the second message based on the first parameter.

According to the method provided in this application, there are a plurality of time domain resource allocation sets, so that different time domain resource allocation sets are used under different conditions. In this way, different types of terminal devices can be scheduled, so that each type of terminal device can process a scheduling message and send a scheduled message in a timely manner, to improve network scheduling flexibility.

In a possible implementation, determining the target time domain resource allocation set includes: when a preset condition is met, determining the first time domain resource allocation set as the target time domain resource allocation set; or when a preset condition is not met, determining the second time domain resource allocation set as the target time domain resource allocation set. The preset condition includes at least one of the following:

A quantity of frequency domain resources for scheduling the first message is greater than a first threshold; or a first system message indicates a random access resource used by a first-type terminal device to perform random access, and the first system message is from a network device.

In a possible implementation, when a subcarrier spacing of a channel on which the first message is located is 15 kHz, the first threshold is 25 resource blocks; when a subcarrier spacing of a channel on which the first message is located is 30 kHz, the first threshold is 12 resource blocks; or
when a subcarrier spacing of a channel on which the first message is located is 60 kHz, the first threshold is six resource blocks.

In a possible implementation, the first time domain resource allocation set includes N values of a parameter *K₂*, each of the N values is greater than or equal to 2, and N is an integer greater than 0.

Because the value of the parameter *K₂* is greater than or equal to 2, the interval determined based on the parameter *K₂* may be greater than time needed by the terminal device to process the first message, so that the terminal device can send the second message in a timely manner.

In a possible implementation, when the value of the parameter *K₂* is equal to 2, a channel mapping mode of a PUSCH on which the second message is located is a type B, and an index S of a start symbol of the second message is greater than or equal to 3.

Alternatively, when the value of the parameter *K₂* is greater than 2, a channel mapping mode of a PUSCH on which the second message is located is a type A or a type B, and an index S of a start symbol of the second message is greater than or equal to 0, or a value range of resource indication value RIV code of an index *S* of a start symbol of the second message and a length *L* of symbols occupied by the second message is 0 to 127.

In a possible implementation, when the target time domain resource allocation set is the first time domain resource allocation set, the interval determined based on the first parameter is greater than or equal to a second threshold, where the second threshold is a minimum time interval between a last symbol of a PDSCH that carries the first message and a 1^{st} symbol of the PUSCH that carries the second message, and the second threshold corresponds to the first-type terminal device.

In a possible implementation, at least one of the first time domain resource allocation set and the second time domain resource allocation set is from the network device.

In a possible implementation, the first message is a random access response message or a fallback random access response message.

The second message is a message 3 in a random access procedure.

According to a second aspect, this application provides a message scheduling method. The method is performed by a network device or a module or a chip in the network device. The method includes: determining a target time domain resource allocation set, where the target time domain resource allocation set is a first time domain resource allocation set or a second time domain resource allocation set; sending a first message, where the first message indicates a first parameter, the first parameter is for determining an interval between the first message and a second message in time domain, and the first parameter is a parameter in the target time domain resource allocation set; and receiving the second message.

In a possible implementation, determining the target time domain resource allocation set includes: when a preset condition is met, determining the first time domain resource allocation set as the target time domain resource allocation set; or when a preset condition is not met, determining the second time domain resource allocation set as the target time domain resource allocation set. The preset condition includes at least one of the following:

A quantity of frequency domain resources for scheduling the first message is greater than a first threshold; or a resource occupied by a third message is a random access resource used by a first-type terminal device to perform random access, the third message is a message before the first message, and the third message is from the terminal device.

In a possible implementation, when a subcarrier spacing of a channel on which the first message is located is 15 kHz, the first threshold is 25 resource blocks; when a subcarrier spacing of a channel on which the first message is located is 30 kHz, the first threshold is 12 resource blocks; or
when a subcarrier spacing of a channel on which the first message is located is 60 kHz, the first threshold is six resource blocks.

In a possible implementation, the first time domain resource allocation set includes N values of a parameter *K₂*, each of the N values is greater than or equal to 2, and N is an integer greater than 0.

In a possible implementation, when the value of the parameter *K₂* is equal to 2, a channel mapping mode of a PUSCH on which the second message is located is a type B, and an index *S* of a start symbol of the second message is greater than or equal to 3; or when the value of the parameter *K₂* is greater than 2, a channel mapping mode of a PUSCH on which the second message is located is a type A or a type B, and an index *S* of a start symbol of the second message is greater than or equal to 0, or a value range of RIV code of an index *S* of a start symbol of the second message and a length *L* of symbols occupied by the second message is 0 to 127.

In a possible implementation, when the target time domain resource allocation set is the first time domain resource allocation set, the interval determined based on the first parameter is greater than or equal to a second threshold, where the second threshold is a minimum time interval between a last symbol of a PDSCH that carries the first message and a 1^{st} symbol of the PUSCH that carries the second message, and the second threshold corresponds to the first-type terminal device.

In a possible implementation, at least one of the first time domain resource allocation set and the second time domain resource allocation set is from the network device.

In a possible implementation, the first message is a random access response message or a fallback random access response message, and the second message is a message 3 in a random access procedure.

According to a third aspect, this application provides a message scheduling method. The method is performed by a terminal device or a module or a chip in the terminal device. The method includes: receiving a first message, where the first message indicates a parameter *K₂*, the parameter *K₂* is for determining an interval between the first message and a second message in time domain; and when a preset condition is met, a value of the parameter *K₂* is greater than or equal to a third threshold; and sending the second message based on the parameter *K₂*.

According to the method provided in this application, when the preset condition is met, the value of the parameter *K₂* is greater than or equal to the third threshold, so that the interval between a scheduling message and a scheduled message is prolonged, and the first-type terminal device can also process the first message in a timely manner, to send the second message.

In a possible implementation, when the preset condition is not met, a value of the parameter *K₂* is less than a third threshold.

In a possible implementation, the preset condition includes at least one of the following: A quantity of frequency domain resources for scheduling the first message is greater than a first threshold; or the first system message indicates a random access resource used by a first-type terminal device to perform random access, and the first system message is from a network device.

In a possible implementation, when a subcarrier spacing of a channel on which the first message is located is 15 kHz, the first threshold is 25 resource blocks; when a subcarrier spacing of a channel on which the first message is located is 30 kHz, the first threshold is 12 resource blocks; or
when a subcarrier spacing of a channel on which the first message is located is 60 kHz, the first threshold is six resource blocks.

In a possible implementation, the third threshold is equal to 3.

The third threshold is 3, so that it can be ensured that the interval determined based on the parameter *K₂* is greater than or equal to a minimum time interval between a last symbol of a PDSCH that carries the first message and a 1^{st} symbol of a PUSCH that carries the second message, so that the first-type terminal device can also process the first message in a timely manner and send the second message.

According to a fourth aspect, this application provides a message scheduling method. The method is performed by a network device or a module or a chip in the network device. The method includes: sending a first message, where the first message indicates a parameter *K₂*, the parameter *K₂* is for determining an interval between the first message and a second message in time domain; and when a preset condition is met, a value of the parameter *K₂* is greater than or equal to a third threshold; and receiving the second message.

In a possible implementation, when the preset condition is not met, a value of the parameter *K₂* is less than a third threshold.

In a possible implementation, the preset condition includes at least one of the following: A quantity of frequency domain resources for scheduling the first message is greater than a first threshold; or a resource occupied by a third message is a random access resource used by a first-type terminal device to perform random access, the third message is a message before the first message, and the third message is from a terminal device.

In a possible implementation, when a subcarrier spacing of a channel on which the first message is located is 15 kHz, the first threshold is 25 resource blocks;
when a subcarrier spacing of a channel on which the first message is located is 30 kHz, the first threshold is 12 resource blocks; or
when a subcarrier spacing of a channel on which the first message is located is 60 kHz, the first threshold is six resource blocks.

In a possible implementation, the third threshold is equal to 3.

According to a fifth aspect, this application provides a message scheduling method. The method is performed by a terminal device or a module or a chip in the terminal device. The method includes: receiving a first message, where the first message indicates a parameter *K₂*, and the parameter *K₂* and a parameter *Δ* are for determining an interval between the first message and a second message in time domain; when a preset condition is met, a value of the parameter Δ is equal to a first value, or when a preset condition is not met, a value of the parameter Δ is equal to a second value; and the first value is greater than a second value, and there is a correspondence between the parameter Δ and a subcarrier spacing of a channel on which the first message is located; and sending the second message based on the parameter *K₂* and the parameter A.

According to the method provided in this application, when the preset condition is met, the value of the parameter Δ is larger, so that the interval between a scheduling message and a scheduled message is prolonged, and a first-type terminal device can also process the first message in a timely manner, to send the second message.

In a possible implementation, the preset condition includes at least one of the following: A quantity of frequency domain resources for scheduling the first message is greater than a first threshold; or a first system message indicates a random access resource used by the first-type terminal device to perform random access, and the first system message is from a network device; or a first system message does not indicate a random access resource used by the first-type terminal device to perform random access, and the first system message is from a network device.

In a possible implementation, when a subcarrier spacing of a channel on which the first message is located is 15 kHz, the first threshold is 25 resource blocks; when a subcarrier spacing of a channel on which the first message is located is 30 kHz, the first threshold is 12 resource blocks; or
when a subcarrier spacing of a channel on which the first message is located is 60 kHz, the first threshold is six resource blocks.

In a possible implementation, when the preset condition is met, and the subcarrier spacing of the channel on which the first message is located is 15 kHz or 30 kHz, the first value is greater than or equal to 4.

In a possible implementation, when the preset condition is not met, and the subcarrier spacing of the channel on which the first message is located is 15 kHz, the second value is 2. When the subcarrier spacing of the channel on which the first message is located is 30 kHz, the second value is 3.

According to a sixth aspect, this application provides a message scheduling method. The method is performed by a network device or a module or a chip in the network device. The method includes: sending a first message, where the first message indicates a parameter *K₂*, and the parameter *K₂* and a parameter Δ are for determining an interval between the first message and a second message in time domain; when a preset condition is met, a value of the parameter Δ is equal to a first value, or when a preset condition is not met, a value of the parameter Δ is equal to a second value; and the first value is greater than a second value, and there is a correspondence between the parameter Δ and a subcarrier spacing of a channel on which the first message is located; and receiving the second message.

In a possible implementation, the preset condition includes at least one of the following: A quantity of frequency domain resources for scheduling the first message is greater than a first threshold; or a resource occupied by a third message is a random access resource used by a first-type terminal device to perform random access, the third message is a message before the first message, and the third message is from the terminal device; or a resource occupied by a third message is not a random access resource used by a first-type terminal device to perform random access.

In a possible implementation, when a subcarrier spacing of a channel on which the first message is located is 15 kHz, the first threshold is 25 resource blocks; when a subcarrier spacing of a channel on which the first message is located is 30 kHz, the first threshold is 12 resource blocks; or
when a subcarrier spacing of a channel on which the first message is located is 60 kHz, the first threshold is six resource blocks.

In a possible implementation, when the preset condition is met, and the subcarrier spacing of the channel on which the first message is located is 15 kHz or 30 kHz, the first value is greater than or equal to 4.

In a possible implementation, when the preset condition is not met, and the subcarrier spacing of the channel on which the first message is located is 15 kHz, the second value is 2. When the subcarrier spacing of the channel on which the first message is located is 30 kHz, the second value is 3.

According to a seventh aspect, an embodiment of this application provides a communication apparatus. The apparatus may be a terminal device, or may be a module (for example, a chip) used in the terminal device. The apparatus has a function of implementing the method in any one of the possible implementations of the first aspect, the third aspect, or the fifth aspect. The function may be implemented by hardware, or may be implemented by hardware executing corresponding software. The hardware or the software includes one or more modules corresponding to the function.

According to an eighth aspect, an embodiment of this application provides a communication apparatus. The apparatus may be a network device or a module (for example, a chip) used in the network device. The apparatus has a function of implementing the method in any one of the possible implementations of the second aspect, the fourth aspect, or the sixth aspect. The function may be implemented by hardware, or may be implemented by hardware executing corresponding software. The hardware or the software includes one or more modules corresponding to the function.

According to a ninth aspect, an embodiment of this application provides a communication apparatus, including a processor and a memory. The memory is configured to store computer instructions. When the apparatus is run, the processor executes the computer instructions stored in the memory, to cause the apparatus to perform the method in any one of the possible implementations of the first aspect to the sixth aspect.

According to a tenth aspect, an embodiment of this application provides a communication apparatus, including units or means (means) for performing steps of any implementation of the first aspect to the sixth aspect.

According to an eleventh aspect, an embodiment of this application provides a communication apparatus, including a processor and an interface circuit. The processor is configured to communicate with another apparatus via the interface circuit, and perform the method in any one of the possible implementations of the first aspect to the sixth aspect. There are one or more processors.

According to a twelfth aspect, an embodiment of this application provides a communication apparatus, including a processor coupled to a memory. The processor is configured to invoke a program stored in the memory, to perform any implementation of the first aspect to the sixth aspect. The memory may be located inside or outside the apparatus. In addition, there may be one or more processors.

According to a thirteenth aspect, an embodiment of this application further provides a computer-readable storage medium. The computer-readable storage medium stores instructions. When the instructions are run on a communication apparatus, the method in any one of the possible implementations of the first aspect to the sixth aspect is performed.

According to a fourteenth aspect, an embodiment of this application further provides a computer program product. The computer program product includes a computer program or instructions. When the computer program or the instructions are run by a communication apparatus, the method in any one of the possible implementations of the first aspect to the sixth aspect is performed.

According to a fifteenth aspect, an embodiment of this application further provides a chip, including a processor, configured to perform the method in any one of the possible implementations of the first aspect to the sixth aspect.

According to a sixteenth aspect, an embodiment of this application further provides a communication system. The communication system includes a terminal device and a network device.

The terminal device is configured to perform the method in any one of the possible implementations of the first aspect, the third aspect, or the fifth aspect.

The network device is configured to perform the method in any one of the possible implementations of the second aspect, the fourth aspect, or the sixth aspect.

These or other aspects of this application are more concise and easier to understand in the descriptions of the following embodiments.

### BRIEF DESCRIPTION OF DRAWINGS

FIG. 1 is a diagram of a mobile communication system applicable to an embodiment of this application;
FIG. 2 is a schematic flowchart of a message scheduling method according to an embodiment of this application;
FIG. 3 is a diagram of an interval between messages according to an embodiment of this application;
FIG. 4 is a schematic flowchart of a message scheduling method according to an embodiment of this application;
FIG. 5 is a schematic flowchart of a message scheduling method according to an embodiment of this application;
FIG. 6 is a schematic flowchart of an access method according to an embodiment of this application;
FIG. 7 is a diagram of a structure of a communication apparatus according to an embodiment of this application; and
FIG. 8 is a diagram of a structure of a communication apparatus according to an embodiment of this application.

### DESCRIPTION OF EMBODIMENTS

The following clearly and completely describes the technical solutions in embodiments of this application with reference to the accompanying drawings in embodiments of this application.

A communication method provided in embodiments of this application may be applied to various mobile communication systems, for example, internet of things (internet of things, IoT), narrowband internet of things (narrowband internet of things, NB-IoT), long term evolution (long term evolution, LTE), a 5^{th} generation (5^{th} generation, 5G) communication system (for example, 5G new radio (new radio, NR)), a hybrid architecture of LTE and 5G, or a new communication system emerging in 6G or future communication development. Alternatively, the communication system may be a machine to machine (machine to machine, M2M) network, a machine type communication (machine type communication, MTC) network, or another network.

In this application, names of messages, names of indication information, and names of fields in the following procedures are merely examples. With evolution of communication technologies, the names of the messages, the names of the indication information, and the names of the fields in the following procedures may change. However, regardless of how the names change, as long as meanings of the messages, the indication information, or the fields are the same as those in this application, the messages, the indication information, or the fields fall within the protection scope of this application. A sequence of steps in the following procedures is merely an example. During actual application, the sequence of steps in each procedure may be adjusted.

A method and an apparatus provided in embodiments of this application are based on a same or similar technical concept. Because problem resolving principles of the method and the apparatus are similar, mutual reference may be made to implementations of the apparatus and the method. Repeated descriptions are not described.

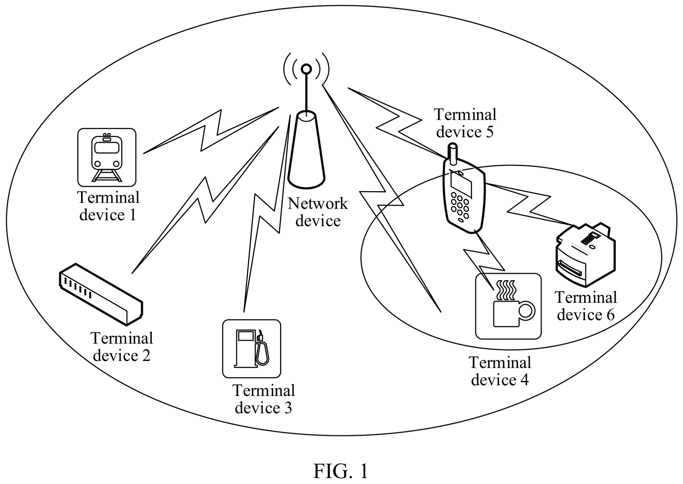

For ease of understanding embodiments of this application, a communication system shown in FIG. 1 is first used as an example to describe in detail a communication system applicable to embodiments of this application. FIG. 1 is a diagram of a communication system applicable to a communication method according to an embodiment of this application. As shown in FIG. 1, a communication system includes a network device and a terminal device 1 to a terminal device 6. In the communication system, the terminal device 1 to the terminal device 6 may send uplink data to the network device, and the network device may send downlink data to the terminal device 1 to the terminal device 6. In addition, a communication system may alternatively include the terminal device 4 to the terminal device 6. In this case, in the communication system, the network device may send downlink data of the terminal device 4 and the terminal device 6 to the terminal device 5, and then the terminal device 5 forwards the downlink data to the terminal device 4 and the terminal device 6.

In this embodiment of this application, the network device may be an access network device in a wireless network. For example, the network device may be a radio access network (radio access network, RAN) node that connects the terminal device to the wireless network, and may also be referred to as an access network device. The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB) a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a network device in a 5G mobile communication system, for example, may be a next generation NodeB (next generation NodeB, gNB), a transmission reception point (transmission reception point, TRP), or a TP in an NR system; or may be one antenna panel or a group of antenna panels (including a plurality of antenna panels) of a base station in the 5G mobile communication system. Alternatively, the network device may be a network node, for example, a BBU or a distributed unit (distributed unit, DU), that constitutes a gNB or a transmission point.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, to implement functions of a radio resource control (radio resource control, RRC) layer. The DU is responsible for processing a physical layer protocol and a real-time service, and implementing functions of a radio link control (radio link control, RLC) layer, a media access control (media access control, MAC) layer, and a physical (physical, PHY) layer.

The terminal device in embodiments of this application may be a wireless terminal apparatus that can receive scheduling and indication information from the network device. The terminal device may also be referred to as user equipment (user equipment, UE), a mobile station (mobile station, MS), a mobile terminal (mobile terminal, MT), or the like. Examples of some terminal devices are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in an internet of vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a device-to-device (device-to-device, D2D) communication terminal apparatus, a vehicle-to-everything (vehicle-to-everything, V2X) communication terminal apparatus, an intelligent vehicle, a telematics box (or referred to as a vehicle-mounted sending unit) (telematics box, T-box), a machine-to-machine/machine-type communication (machine-to-machine/machine-type communication, M2M/MTC) terminal apparatus, an internet of things (internet of things, IoT) terminal apparatus, and the like.

In embodiments of this application, an apparatus configured to implement a function of the terminal device may be the terminal device, or may be an apparatus that can support the terminal device to implement the function, for example, a chip system, where the apparatus may be installed in the terminal device. In the technical solutions provided in embodiments of this application, the technical solutions provided in embodiments of this application are described by using an example in which the apparatus configured to implement the function of the terminal device is the terminal device.

In embodiments of this application, there may be a plurality of types of terminal devices. For example, the types of the terminal devices may include a legacy (legacy) terminal device, a reduced capability (reduced capability, RedCap) terminal device, an enhanced RedCap (enhanced RedCap, eRedCap) terminal device, and the like. The legacy terminal device may be an NR release 15 (Rel-15) terminal device, or may be an NR Rel-16 terminal device. This is not limited herein. The eRedCap terminal device may alternatively be an R18 eRedCap terminal device.

In this application, the eRedCap terminal device may also be referred to as a first-type terminal device, and the legacy terminal device and the RedCap terminal device may also be referred to as second-type terminal devices.

In this application, the first-type terminal device may meet at least one of the following.
1. A radio frequency bandwidth of the first-type terminal device exceeds a maximum baseband processing bandwidth.
2. A maximum transmission bandwidth supported by the first-type terminal device exceeds the maximum baseband processing bandwidth.
3. A maximum scheduling bandwidth supported by the first-type terminal device exceeds the maximum baseband processing bandwidth.
4. The first-type terminal device supports a peak data rate of a first value, where a value of the first value may be 10 Mbps or 6 Mbps.
5. The first-type terminal device operates in a frequency range 1 (frequency range 1, FR1).
6. The first-type terminal device meets the maximum scheduling bandwidth of 20 MHz, and the first-type terminal device meets the following constraint: A product of a maximum quantity of layers supported by the first-type terminal device, a maximum modulation order supported by the first-type terminal device, and a scale factor is not less than 0.75 or 0.8, or *v_{Layers}·Qₘ*·*f*≥Y (where a value of Y may be 0.75 or 0.8). *v_{Layers}* represents the maximum quantity of layers supported by the first-type terminal device, *Qₘ* represents the maximum modulation order supported by the first-type terminal device, *f* represents the scale factor, and the scale factor is configured by the network device.
7. The first-type terminal device is a terminal device for which a maximum quantity of RBs on a physical shared channel per uplink hop (hop) in a slot is 25 physical resource blocks (physical resource blocks, PRBs) when a subcarrier spacing (subcarrier spacing, SCS) is 15 kHz and the maximum quantity of RBs on the physical shared channel per uplink hop in the slot is 12 PRBs when the SCS is 30 kHz, and the product of the maximum quantity of layers supported by the first-type terminal device, the maximum modulation order supported by the first-type terminal device, and the scale factor is not less than 3 or 3.2, or *v_{Layers}·Qₘ*·*f≥X* (where a value of X may be 3 or 3.2).

A maximum bandwidth supported by the RedCap terminal device in the FR1 is 20 MHz, and a maximum bandwidth supported by the RedCap terminal device in a frequency range 2 (frequency range 2, FR2) is 100 MHz; a maximum quantity of data radio bearers (data radio bearers, DRBs) that is mandatorily supported by the RedCap terminal device is 8; a packet data convergence protocol sequence number size (packet data convergence protocol sequence number size, PDCP SN SIZE) that is mandatorily supported by the RedCap terminal device is 12, and a PDCP SN size that is optionally supported by the RedCap terminal device is 18; a radio link control amplitude modulation sequence number size (radio link control amplitude modulation sequence number size, RLC AM SN SIZE) that is mandatorily supported by the RedCap terminal device is 12, and an RLC AM SN size that is optionally supported by the RedCap terminal device is 18; during operation in the FR1, a RedCap terminal device that supports one receive antenna supports one downlink multiple-input multiple-output (multiple-input multiple-output, MIMO) layer, and a RedCap terminal device that supports two receive antennas supports two downlink MIMO layers; during operation in the FR2, the RedCap terminal device always supports two receive antennas and supports one or two downlink MIMO layers; and the RedCap terminal device does not support features or capabilities associated with carrier aggregation (carrier aggregation, CA), multi-rate dual connectivity (multi-rate dual connectivity, MR-DC), a dual active protocol stack (dual protocol stack, DAPS), conditional primary secondary cell addition/change (conditional PSCell addition/change, CPAC), and integrated access and backhaul (integrated access and backhaul, IAB).

The first-type terminal device may have a first capability or a second capability. The first capability and the second capability may be defined in different manners.

The first capability and the second capability are defined as follows: The first-type terminal with the first capability is a terminal device that meets the constraint of *v_{Layers}·Qₘ·f*≥*Y* (where the value of Y may be 0.75 or 0.8) and that meets the maximum scheduling bandwidth of 20 MHz. The first-type terminal with the second capability is a terminal device for which the maximum quantity of RBs on the physical shared channel per uplink hop in a slot is 25 PRBs when the SCS is 15 kHz and the maximum quantity of RBs on the physical shared channel per uplink hop in the slot is 12 PRBs when the SCS is 30 kHz, and *v_{Layers}*·*Qₘ*·*f*≥*X* (where the value of X may be 3 or 3.2).

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with evolution of network architectures and emergence of new service scenarios, the technical solutions provided in embodiments of this application are also applicable to similar technical problems.

For ease of description, in this application, a resource used by the first-type terminal to initiate random access, a resource for sending a preamble sequence, or a random access resource dedicated to the first-type terminal device is referred to as a first random access resource, and a resource used by the NR RedCap terminal device in the second-type terminal to initiate random access, a resource for sending a preamble sequence, or a random access resource dedicated to the NR RedCap terminal device is referred to as a second random access resource.

In embodiments of this application, an NR network scenario in a wireless communication network is used as an example to describe some scenarios. It should be noted that the solutions in embodiments of this application may further be applied to another wireless communication network, and a corresponding name may also be replaced with a name of a corresponding function in the another wireless communication network.

When the following method procedures in this application are applied to the system shown in FIG. 1, the network device or the module or the chip in the network device in FIG. 1 may perform the method performed by the network device in the following procedure, and the terminal device or the module or the chip in the terminal device in FIG. 1 may perform the method performed by the terminal device in the following procedures. It may be understood that a specific structure of an execution body of the method provided in embodiments of this application is not particularly limited in the following embodiments, provided that a program that records code of the method provided in embodiments of this application can be run to perform access according to the method provided in embodiments of this application. For example, the method may be performed by a terminal device or a functional module that can invoke and execute a program in the terminal device, or may be performed by a network device or a functional module that can invoke and execute a program in the network device. The following uses only the terminal device or the network device as an example for description.

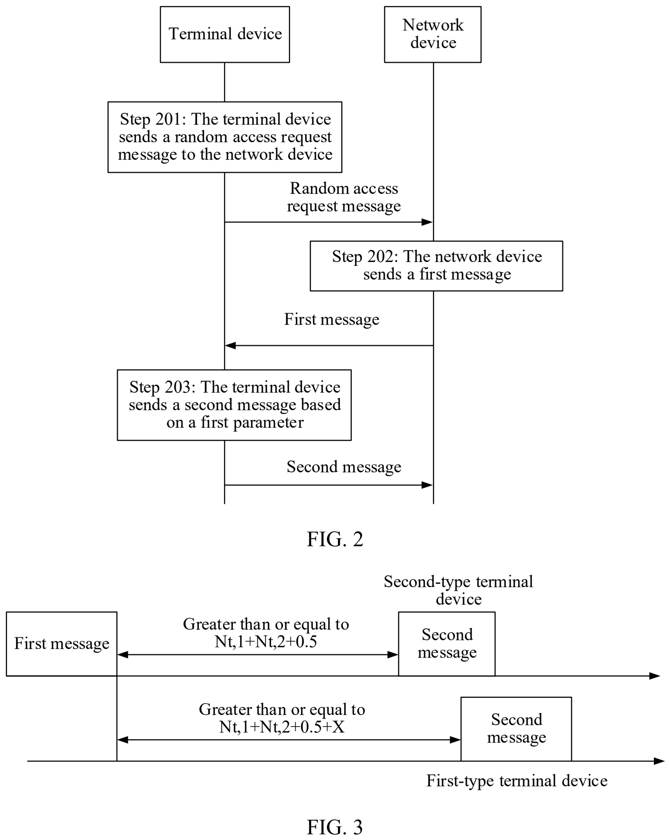

FIG. 2 is a schematic flowchart of a message scheduling method according to an embodiment of this application. The method includes the following steps.

Step 201: A terminal device sends a random access request message to a network device.

Correspondingly, the network device receives the random access request message.

The random access request message may be a message 1 (message 1, msg1) or a message A (message A, msgA) in a random access procedure.

If a network side configures a first random access resource for a first-type terminal device, when the terminal device is the first-type terminal device, the terminal device may send the random access request message by using the first random access resource.

The network device may configure the first random access resource by using a first system message. A specific process is not described.

This application is described by using an example in which the terminal device accesses the network device in the random access procedure, and the network device schedules a second message by using a first message. If this application is applied to another scenario, step 201 may alternatively not be performed.

Step 202: The network device sends the first message.

Correspondingly, the terminal device receives the first message.

The first message may be a message in response to the random access request message. In an implementation, the first message is a message scheduled by using downlink control information (downlink control information, DCI) scrambled by using a random access (random access, RA) radio network temporary identifier (radio network temporary identifier, RNTI) or a msgB RNTI. For example, the first message may be a random access response (random access response, RAR) message or a fallback (fallback) RAR message; or the first message is a message B (message B, msgB).

The first message may further indicate a first parameter. The first parameter is for determining an interval between the first message and the second message in time domain. The second message may be a message scheduled by using the first message. For example, the second message is a message 3 in the random access procedure.

In an implementation, the first parameter is a parameter in a target time domain resource allocation (time domain resource allocation, TDRA) set, and the target time domain resource allocation set is a first time domain resource allocation set or a second time domain resource allocation set.

For example, the first parameter is a parameter *K₂*, and the target time domain resource allocation set includes one or more values of the parameter *K₂*.

In an implementation, the first message may include an RAR uplink (uplink, UL) grant (grant), the RAR UL grant includes a physical uplink shared channel (physical uplink shared channel, PUSCH) time domain resource allocation field, the PUSCH time domain resource allocation field may include a row index (row index) in the target time domain resource allocation set, and one row index corresponds to one value of the first parameter in the target time domain resource allocation set. The terminal device may determine the value of the first parameter based on the PUSCH time domain resource allocation field in the first message.

In an implementation, if the terminal device is the first-type terminal device, time needed by the terminal device to process the second message is Nt,1+Nt,2+0.5+X in a unit of milliseconds (ms). If the terminal device is a second-type terminal device, time needed by the terminal device to process the second message is Nt,1+Nt,2+0.5.

In an implementation, the interval determined based on the first parameter is greater than or equal to a second threshold. The second threshold is a minimum time interval between a last symbol of a PDSCH that carries the first message and a 1^{st} symbol of a PUSCH that carries the second message. For example, as shown in FIG. 3, when the target time domain resource allocation set is the first time domain resource allocation set, the second threshold corresponds to the first-type terminal device. For example, the second threshold is Nt,1+Nt,2+0.5+X. When the target time domain resource allocation set is the second time domain resource allocation set, the second threshold corresponds to the second-type terminal device. For example, the second threshold is Nt,1+Nt,2+0.5.

In an implementation, the interval between the first message and the second message that is determined based on the first parameter is equal to *K₂+*Δ*-*1 in a unit of slots. When a subcarrier spacing is 15 kHz, one slot=1 ms. When a subcarrier spacing is 30 kHz, one slot=0.5 ms. One slot includes 14 orthogonal frequency division multiplexing (orthogonal frequency division multiplexing, OFDM) symbols (which are referred to as symbols for short below). In another case of the subcarrier spacing, duration of one slot may be deduced by analogy. Details are not described.

If the terminal device is the first-type terminal device, duration corresponding to *K₂*+Δ-1 is greater than or equal to duration corresponding to Nt,1+Nt,2+0.5+X. If the terminal device is the second-type terminal device, duration corresponding to *K₂+*Δ*-*1 is greater than or equal to duration corresponding to Nt,1+Nt,2+0.5. Nt,1 represents PDSCH processing time of the terminal device, and Nt,2 represents PUSCH preparation time of the terminal device. The value of the parameter *K₂* and a value of the parameter Δ are described below.

In an implementation, when a subcarrier spacing of the PUSCH is 15 kHz, a maximum value of Nt,1+Nt,2+0.5 is 31 symbols; or when a subcarrier spacing of the PUSCH is 30 kHz, a maximum value of Nt,1+Nt,2+0.5 is 39 symbols.

A value of X may be predefined or configured by the network device. In an implementation, when the subcarrier spacing of the PUSCH that carries the second message is 15 kHz, the value of X is 0.5 ms; or when the subcarrier spacing of the PUSCH that carries the second message is 30 kHz, the value of X is 0.25 ms.

In an implementation, when the subcarrier spacing of the PUSCH that carries the second message is 15 kHz, the value of X is 1 ms; or when the subcarrier spacing of the PUSCH that carries the second message is 30 kHz, the value of X is 0.5 ms.

The foregoing is merely an example, and there may be another case for the value of X. Details are not described herein.

In an implementation, the first time domain resource allocation set may correspond to the first-type terminal device, or the first time domain resource allocation set is for scheduling the first-type terminal device. The second time domain resource allocation set may correspond to the second-type terminal device, or the second time domain resource allocation set is for scheduling the second-type terminal device. The foregoing correspondence may be preconfigured, or may be configured by the network device.

In an implementation, before sending the first message, the network device determines the target time domain resource allocation set from the first time domain resource allocation set and the second time domain resource allocation set.

For example, if the network device may determine a type of a terminal device that receives the first message, and the terminal device is the first-type terminal device, the network device determines the first time domain resource allocation set as the target time domain resource allocation set; or the terminal device is the second-type terminal device, and the network device determines the first time domain resource allocation set or the second time domain resource allocation set as the target time domain resource allocation set. How the network device determines the type of the terminal device is not limited in this application. Details are not described herein.

For another example, when a first preset condition is met, the network device determines the first time domain resource allocation set as the target time domain resource allocation set; or when a first preset condition is not met, the network device determines the second time domain resource allocation set as the target time domain resource allocation set.

In an implementation, the first preset condition includes at least one of the following:

A quantity of frequency domain resources for scheduling the first message is greater than a first threshold, in other words, a quantity of frequency domain resources occupied by the first message is greater than the first threshold. The quantity of frequency domain resources herein may be a bandwidth size, a resource block (resource block, RB), or the like. This is not limited in this application.

A resource occupied by a third message is a random access resource used by the first-type terminal device to perform random access (referred to as the first random access resource for short below), the third message is a message before the first message, and the third message is from the terminal device. The first message may be a response message of the third message. For example, the third message may be the random access request message in step 201.

A value of the first threshold may be related to a subcarrier spacing of a channel on which the first message is located, and the channel on which the first message is located may be the physical downlink shared channel (physical downlink shared channel, PDSCH). In an implementation, when the subcarrier spacing of the channel on which the first message is located is 15 kHz, the first threshold is 25 resource blocks; when the subcarrier spacing of the channel on which the first message is located is 30 kHz, the first threshold is 12 resource blocks; or when the subcarrier spacing of the channel on which the first message is located is 60 kHz, the first threshold is six resource blocks.

With reference to the foregoing descriptions, in a first implementation, when the quantity of frequency domain resources used by the network device to schedule the first message is greater than the first threshold, if a receiving end of the first message is the first-type terminal device, the first time domain resource allocation set is determined as the target time domain resource allocation set. When the quantity of frequency domain resources used by the network device to schedule the first message is greater than the first threshold, if a receiving end of the first message is the second-type terminal device, the second time domain resource allocation set is determined as the target time domain resource allocation set.

In a second implementation, when the quantity of frequency domain resources used by the network device to schedule the first message is greater than the first threshold, regardless of whether a receiving end of the first message is the first-type terminal device or the second-type terminal device, the first time domain resource allocation set is determined as the target time domain resource allocation set. When the quantity of frequency domain resources used by the network device to schedule the first message is less than or equal to the first threshold, regardless of whether a receiving end of the first message is the first-type terminal device or the second-type terminal device, the second time domain resource allocation set is determined as the target time domain resource allocation set.

In a third implementation, when the resource occupied by the third message received by the network device is the first random access resource, the first time domain resource allocation set is determined as the target time domain resource allocation set. When the resource occupied by the third message received by the network device is not the first random access resource (for example, is a second random access resource), the second time domain resource allocation set is determined as the target time domain resource allocation set.

In a fourth implementation, when the resource occupied by the third message received by the network device is the first random access resource, the first time domain resource allocation set is determined as the target time domain resource allocation set. In this case, the second time domain resource allocation set may be ignored, and the second time domain resource allocation set is no longer used. For both the first-type terminal device and the second-type terminal device, the first time domain resource allocation set is determined as the target time domain resource allocation set.

In a fifth implementation, when the quantity of frequency domain resources used by the network device to schedule the first message is greater than the first threshold, and the resource occupied by the third message received by the network device is the first random access resource, the first time domain resource allocation set is determined as the target time domain resource allocation set. When the quantity of frequency domain resources used by the network device to schedule the first message is less than or equal to the first threshold, or the resource occupied by the third message received by the network device is not the first random access resource, the second time domain resource allocation set is determined as the target time domain resource allocation set.

Similarly, after receiving the first message, the terminal device determines the target time domain resource allocation set from the first time domain resource allocation set and the second time domain resource allocation set.

For example, when a second preset condition is met, the terminal device determines the first time domain resource allocation set as the target time domain resource allocation set; or when a second preset condition is not met, the terminal device determines the second time domain resource allocation set as the target time domain resource allocation set.

In an implementation, the second preset condition includes at least one of the following:

A quantity of frequency domain resources for scheduling the first message is greater than a first threshold.

The first system message indicates a random access resource used by the first-type terminal device to perform random access (referred to as the first random access resource for short below), the first system message is from the network device, and the first system message is before the first message.

With reference to the foregoing descriptions, in a first implementation, when the quantity of frequency domain resources used by the network device to schedule the first message is greater than the first threshold, if the terminal device is the first-type terminal device, the first time domain resource allocation set is determined as the target time domain resource allocation set. When the quantity of frequency domain resources used by the network device to schedule the first message is greater than the first threshold, if the terminal device is the second-type terminal device, the second time domain resource allocation set is determined as the target time domain resource allocation set.

In a second implementation, when the quantity of frequency domain resources used by the network device to schedule the first message is greater than the first threshold, regardless of whether the terminal device is the first-type terminal device or the second-type terminal device, the first time domain resource allocation set is determined as the target time domain resource allocation set. When the quantity of frequency domain resources used by the network device to schedule the first message is less than or equal to the first threshold, regardless of whether the terminal device is the first-type terminal device or the second-type terminal device, the second time domain resource allocation set is determined as the target time domain resource allocation set.

In a third implementation, when the first system message indicates the first random access resource, the first time domain resource allocation set is determined as the target time domain resource allocation set. When the first system message does not indicate the first random access resource, the second time domain resource allocation set is determined as the target time domain resource allocation set.

In a fourth implementation, when the first system message indicates the first random access resource, the first time domain resource allocation set is determined as the target time domain resource allocation set. In this case, the second time domain resource allocation set may be ignored, and the second time domain resource allocation set is no longer used. For both the first-type terminal device and the second-type terminal device, the first time domain resource allocation set is determined as the target time domain resource allocation set.

In a fifth implementation, when the quantity of frequency domain resources used by the network device to schedule the first message is greater than the first threshold, and the first system message indicates the first random access resource, the first time domain resource allocation set is determined as the target time domain resource allocation set. When the quantity of frequency domain resources used by the network device to schedule the first message is less than or equal to the first threshold, or the first system message does not indicate the first random access resource, the second time domain resource allocation set is determined as the target time domain resource allocation set.

In this application, the first time domain resource allocation set and the second time domain resource allocation set may be predefined, or may be configured by the network side.

In an implementation, the second time domain resource allocation set may be shown in Table 1.

**Table 1 Second time domain resource allocation set**

| Row index | PUSCH mapping type | *K₂* | *S* | *L* |
|---|---|---|---|---|
| 1 | Type A | *j* | 0 | 14 |
| 2 | Type A | *j* | 0 | 12 |
| 3 | Type A | *j* | 0 | 10 |
| 4 | Type B | *j* | 2 | 10 |
| 5 | Type B | *j* | 4 | 10 |
| 6 | Type B | *j* | 4 | 8 |
| 7 | Type B | *j* | 4 | 6 |
| 8 | Type A | *j+1* | 0 | 14 |
| 9 | Type A | *j+1* | 0 | 12 |
| 10 | Type A | *j+1* | 0 | 10 |
| 11 | Type A | *j+2* | 0 | 14 |
| 12 | Type A | *j+2* | 0 | 12 |
| 13 | Type A | *j+2* | 0 | 10 |
| 14 | Type B | *j* | 8 | 6 |
| 15 | Type A | *j+3* | 0 | 14 |
| 16 | Type A | *j+3* | 0 | 10 |

One row index corresponds to four parameters: a PUSCH mapping type, *K₂*, *S,* and *L.* The PUSCH mapping type indicates a mapping type of the PUSCH that carries the second message, *S* indicates an index of a start symbol of the second message, and *L* indicate a quantity of symbols occupied by the second message.

When the target time domain resource allocation set is the second time domain resource allocation set, for a value of *j*, refer to Table 2.

**Table 2**

| *µ_{PUSCH}* | *j* |
|---|---|
| 0 | 1 |
| 1 | 1 |
| 2 | 2 |
| 3 | 3 |
| 5 | 11 |
| 6 | 21 |

*µ_{PUSCH}* indicates the subcarrier spacing of the PUSCH that carries the second message. For example, when *µ_{PUSCH}* is 0, the subcarrier spacing of the PUSCH is 15×2^{µPUSCH}=15×2⁰=15 kHz; or when *µ_{PUSCH}* is 1, the subcarrier spacing of the PUSCH is 15×2^{µPUSCH}=15×2¹=30 kHz. Other cases are deduced by analogy, and details are not described.

When the target time domain resource allocation set is the second time domain resource allocation set, for the value of the parameter Δ, refer to Table 3.

**Table 3**

| *µ_{PUSCH}* | Δ |
|---|---|
| 0 | 2 |
| 1 | 3 |
| 2 | 4 |
| 3 | 6 |
| 5 | 24 |
| 6 | 48 |

In this application, if the terminal device is the second-type terminal device, or when the first preset condition is not met, the network device determines that the target time domain resource allocation set is the second time domain resource allocation set, and the value of the first parameter indicated by the network device by using the first message is a value corresponding to the parameter *K₂* in the second time domain resource allocation set. In this case, it can be ensured that the interval determined based on the first parameter is greater than or equal to Nt,1+Nt,2+0.5. Therefore, the terminal device can send the second message in a timely manner.

In this application, if the terminal device is the first-type terminal device, or when the first preset condition is met, the network device determines that the target time domain resource allocation set is the first time domain resource allocation set, and the value of the first parameter indicated by the network device by using the first message is a value corresponding to the parameter *K₂* in the first time domain resource allocation set. To ensure that the interval determined based on the first parameter is greater than or equal to Nt,1+Nt,2+0.5+X, and the terminal device has enough time to process the first message, and can send the second message based on the first message, the first time domain resource allocation set may meet at least one of the following constraint conditions.

The first time domain resource allocation set includes N values of the parameter *K₂*, where each of the N values is greater than or equal to 2, or each of the N values is greater than or equal to *j+1,* and N is an integer greater than 0.

When the value of the parameter *K₂* is equal to 2, a channel mapping mode of the PUSCH on which the second message is located is the type B, and the index S of the start symbol of the second message is greater than or equal to 3; or
when the value of the parameter *K₂* is greater than 2, a channel mapping mode of the PUSCH on which the second message is located is the type A or the type B, and the index S of the start symbol of the second message is greater than or equal to 0, or a value range of resource indication value (resource indication value, RIV) code of the index S of the start symbol of the second message and a length *L* of symbols occupied by the second message is 0 to 127, where the second message herein may be replaced with "a message scheduled by using the first message".

For example, in a first implementation, the first time domain resource allocation set may be shown in Table 4.

**Table 4 First time domain resource allocation set**

| Row index | PUSCH mapping type | *K₂* | *S* | *L* |
|---|---|---|---|---|
| 1 | Type A | *j+2* | 0 | 14 |
| 2 | Type A | *j+2* | 0 | 12 |
| 3 | Type A | *j+2* | 0 | 10 |
| 4 | Type B | *j+2* | 2 | 10 |
| 5 | Type B | *j+1* | 4 | 10 |
| 6 | Type B | *j+1* | 4 | 8 |
| 7 | Type B | *j+1* | 4 | 6 |
| 8 | Type B | *j+1* | 8 | 6 |
| 9 | Type A | *j+3* | 0 | 14 |
| 10 | Type A | *j+3* | 0 | 10 |
| 11 to 16 | Reserved | Reserved | Reserved | Reserved |

It can be learned from Table 4 that when the PUSCH mapping type is the type A, or the PUSCH mapping type is the type B, and the index S of the start symbol is less than 3, *K₂* is greater than or equal to *j+2.* In another case, *K₂* is equal to *j+1.*

In this implementation, the value of j is determined based on Table 2. The value of the parameter Δ is determined based on Table 3.

In this implementation, the interval determined based on the first parameter is *K₂+Δ-*1*.* When the subcarrier spacing is 15 kHz, a minimum value of *K₂+*Δ*-*1 is three slots, that is, 42 symbols. Assuming that X=0.5, a maximum value of Nt,1+Nt,2+0.5+X is 38 symbols, and *K₂+*Δ-1 is greater than the maximum value of Nt,1+Nt,2+0.5+X. When the subcarrier spacing is 30 kHz, a minimum value of *K₂+*Δ*-*1 is four slots, that is, 56 symbols. Assuming that X=1, a maximum value of Nt,1+Nt,2+0.5+X is 53 symbols, and *K₂+*Δ*-*1 is greater than the maximum value of Nt,1+Nt,2+0.5+X. Therefore, if the terminal device is the first-type terminal device, or when the network device determines to schedule the second message by using the value of the parameter *K₂* in the first time domain resource allocation set when the first preset condition is met, the terminal device can process the first message in a timely manner, so that the second message can be sent based on the first message.

In a second implementation, the first time domain resource allocation set may be shown in Table 5.

**Table 5 First time domain resource allocation set**

| Row index | PUSCH mapping type | *K₂* | *S* | *L* |
|---|---|---|---|---|
| 1 | Type A | *j+2* | 0 | 14 |
| 2 | Type A | *j+2* | 0 | 12 |
| 3 | Type A | *j+2* | 0 | 10 |
| 4 | Type B | *j+1* | 3 or 4 | 10 |
| 5 | Type B | *j+1* | 4 | 10 |
| 6 | Type B | *j+1* | 4 | 8 |
| 7 | Type B | *j+1* | 4 | 6 |
| 8 | Type A | *j+2* | 0 | 14 |
| 9 | Type A | *j+2* | 0 | 12 |
| 10 | Type A | *j+2* | 0 | 10 |
| 11 | Type B | *j+1* | 8 | 6 |
| 12 | Type A | *j+3* | 0 | 14 |
| 13 | Type A | *j+3* | 0 | 10 |
| 14 to 16 | Reserved | Reserved | Reserved | Reserved |

It can be learned from Table 5 that, when the PUSCH mapping type is the type B, and *K₂* is equal to *j+1,* a value of *S* is greater than or equal to 3. In another case, *K₂* is greater than or equal to *j+2,* and *S* is equal to 0.

In this implementation, the value of j is determined based on Table 2. The value of the parameter Δ is determined based on Table 3.

In this implementation, if the terminal device is the first-type terminal device, or when the network device determines to schedule the second message by using the value of the parameter *K₂* in the first time domain resource allocation set when the first preset condition is met, the interval *K₂+*Δ*-*1 determined based on the first parameter is also greater than or equal to a maximum value of Nt,1+Nt,2+0.5+X, and the terminal device can process the first message in a timely manner, so that the second message can be sent based on the first message.

In this application, if the first time domain resource allocation set is configured by the network device, the network device may configure the first time domain resource allocation set by using a second system message.

In an implementation, the second system message is a system information block 1 (system information block 1, SIB1), and a PUSCH time domain resource allocation (PUSCH-TimeDomainResourceAllocation) field in the SIB1 may include the first time domain resource allocation set.

Similarly, if the second time domain resource allocation set is configured by the network device, the network device may configure the second time domain resource allocation set by using the second system message. A specific process is not described.

Step 203: The terminal device sends the second message based on the first parameter.

Correspondingly, the network device receives the second message.

The terminal device may determine, based on the first parameter, the interval between the last symbol of the PDSCH that carries the first message and the 1^{st} symbol of the PUSCH that carries the second message, that is, determine a symbol location of the second message in time domain, to send the second message on a corresponding symbol. A specific process is not described.

According to the method provided in this application, there are a plurality of time domain resource allocation sets, so that different time domain resource allocation sets are used under different conditions. In this way, different types of terminal devices can be scheduled, so that each type of terminal device can process a scheduling message and send a scheduled message in a timely manner, to improve network scheduling flexibility.

In this application, the first-type terminal device and the second-type terminal device may further jointly correspond to one time domain resource allocation set. When scheduling the first-type terminal device, the network device preferentially uses a larger value in values of the parameter *K₂*, so that an interval between the scheduling message and the scheduled message is prolonged, and the first-type terminal device can also process the first message in a timely manner. The following provides detailed descriptions.

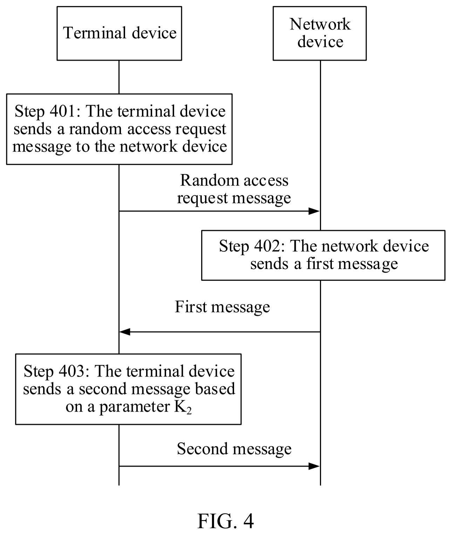

FIG. 4 is a schematic flowchart of a message scheduling method according to an embodiment of this application. The method includes the following steps.

Step 401: A terminal device sends a random access request message to a network device.

Correspondingly, the network device receives the random access request message.

The random access request message may be a message 1 or a message A in a random access procedure.

If a network side configures, for a first-type terminal device, a random access resource used for performing random access, that is, a dedicated random access resource of the first-type terminal device, when the terminal device is the first-type terminal device, the terminal device may send the random access request message by using the dedicated random access resource of the first-type terminal device.

The network device may configure, by using a first system message, the random access resource used by the first-type terminal device to perform random access. A specific process is not described.

This application is described by using an example in which the terminal device accesses the network device in the random access procedure, and the network device schedules a second message by using a first message. If this application is applied to another scenario, step 401 may alternatively not be performed.

Step 402: The network device sends the first message.

Correspondingly, the terminal device receives the first message.

For an implementation of the first message, refer to the descriptions in step 202. Details are not described herein again.

In an implementation, the first message indicates a parameter *K₂*, and the parameter *K₂* is for determining an interval between the first message and the second message in time domain. The parameter *K₂* is a parameter in a time domain resource allocation set, and the time domain resource allocation set includes a plurality of values of the parameter *K₂*. For specific content of the time domain resource allocation set, refer to the foregoing Table 1. In other words, the time domain resource allocation set herein may be the same as the second time domain resource allocation set in the foregoing procedure. Details are not described herein again.

In an implementation, the first message may include an RAR UL grant, the RAR UL grant includes a PUSCH time domain resource allocation field, the PUSCH time domain resource allocation field may include a row index in the time domain resource allocation set, and one row index corresponds to one value of the parameter *K₂* in the time domain resource allocation set. The terminal device may determine the value of the parameter *K₂* based on the PUSCH time domain resource allocation field in the first message.

In an implementation, the interval determined based on the parameter *K₂* is greater than or equal to a second threshold. The second threshold is a minimum time interval between a last symbol of a PDSCH that carries the first message and a 1^{st} symbol of a PUSCH that carries the second message. For example, for the first-type terminal device, the second threshold is Nt,1+Nt,2+0.5+X. For a second-type terminal device, the second threshold is Nt,1+Nt,2+0.5.

An interval determined based on the parameter *K₂* and a parameter Δ may be equal to *K₂+Δ-*1*.*For values of X and the parameter Δ, refer to the descriptions in step 202. Details are not described herein again.

In an implementation, if the terminal device is the first-type terminal device, or if a preset condition is met, duration corresponding to *K₂+*Δ*-*1 is greater than or equal to duration corresponding to Nt,1+Nt,2+0.5+X. If the terminal device is the second-type terminal device, or if a preset condition is not met, duration corresponding to *K₂+*Δ*-*1 is greater than or equal to duration corresponding to Nt,1+Nt,2+0.5.

In an implementation, when the preset condition is met, the value of the parameter *K₂* is greater than or equal to a third threshold; or when the preset condition is not met, the value of the parameter *K₂* may be less than a third threshold, or may be greater than or equal to a third threshold. For example, the third threshold is equal to 3. The third threshold may be predefined, or may be configured by the network device.

In an implementation, when the preset condition is met, the value that is of the parameter *K₂* in the time domain resource allocation set and that corresponds to the row index included in the first message is greater than or equal to a third threshold.

For example, the third threshold is equal to 3. When the preset condition is met, the row index included in the first message is one of {11, 12, 13, 15, 16}. In this case, the value of the parameter *K₂* indicated by the first message is greater than or equal to 3.

In an implementation, when the preset condition is met, a parameter j for determining the parameter *K₂* is equal to a third value, the third value is greater than or equal to a fourth threshold, and the fourth threshold is the third threshold minus 1. In this way, the value of the parameter *K₂* may be greater than or equal to the third threshold. When the preset condition is not met, a parameter j for determining the parameter *K₂* is equal to a fourth value. There is a correspondence between the third value and the fourth value and a subcarrier spacing of a channel on which the first message is located.

For example, the fourth threshold is equal to 2, and when the preset condition is met, a value of j may be shown in Table 6.

**Table 6**

| *µ_{PUSCH}* | *j* |
|---|---|
| 0 | 3 |
| 1 | 3 |

When the preset condition is not met, a value of j may be shown in Table 2.

In an implementation, when the preset condition is met, the parameter j is equal to a fifth value; or when the preset condition is not met, the parameter j is equal to a sixth value. In this way, the value of the parameter *K₂* may be increased, so that the terminal device obtains more time to process the message. There is a correspondence between the fifth value and the sixth value and the subcarrier spacing of the channel on which the first message is located. When the fifth value and the sixth value correspond to a same subcarrier spacing, the fifth value is greater than the sixth value. In an implementation, the value of the parameter *K₂* indicated by the first message is a value in the time domain resource allocation set, and the time domain resource allocation set includes a plurality of values of the parameter *K₂*. For specific content of the time domain resource allocation set, refer to the foregoing Table 1. In other words, the time domain resource allocation set in this implementation may be the same as the second time domain resource allocation set in the foregoing procedure. Details are not described herein again.

In an implementation, the fifth value is equal to a sum of the sixth value and a preset value. For example, the preset value is equal to 2. Only one value is used to meet scheduling time sequence requirements in two different subcarrier spacings.

In an implementation, the preset value is related to the subcarrier spacing of the channel on which the first message is located. For example, when the subcarrier spacing is 15 kHz, the preset value is equal to 2; or when the subcarrier spacing is 30 kHz, the preset value is equal to 1. Different time sequences are used to relax time in the two subcarrier spacings, to improve flexibility of network scheduling.

The subcarrier spacings of 15 kHz and 30 kHz are used as an example. When the preset condition is met, the value of j may be shown in Table 7.

**Table 7**

| *µ_{PUSCH}* | *j* |
|---|---|
| 0 | 3 |
| 1 | 3 |

When the preset condition is not met, the value of j may be shown in Table 8.

**Table 8**

| *µ_{PUSCH}* | *j* |
|---|---|
| 0 | 1 |
| 1 | 1 |

According to Table 7 and Table 8, when the subcarrier spacing is 15 kHz, and the preset condition is met, j=3; or when the preset condition is not met, j=1.

In an implementation, the first message may further indicate the value of the parameter j. For example, when the preset condition is met, the first message indicates that the value of the parameter j is the fifth value; or when the preset condition is not met, the first message indicates that the value of the parameter j is the sixth value.

In an implementation, for the network device, the preset condition includes at least one of the following:

A quantity of frequency domain resources for scheduling the first message is greater than a first threshold.

A resource occupied by a third message is the random access resource used by the first-type terminal device to perform random access (that is, a first random access resource), the third message is a message before the first message, and the third message is from the terminal device. For example, the third message is the random access request message.

In an implementation, for the terminal device, the preset condition includes at least one of the following:

A quantity of frequency domain resources for scheduling the first message is greater than a first threshold; or
the first system message indicates the random access resource used by the first-type terminal device to perform random access (that is, a first random access resource), and the first system message is from the network device.

For example, when the quantity of frequency domain resources for scheduling the first message is greater than the first threshold, or when the first system message indicates the first random access resource, or the resource occupied by the third message is the random access resource used by the first-type terminal device to perform random access, the value of the parameter *K₂* is greater than or equal to the third threshold.

For example, when the quantity of frequency domain resources for scheduling the first message is greater than the first threshold, and the first system message indicates the first random access resource, the value of the parameter *K₂* is greater than or equal to the third threshold.

For example, when the quantity of frequency domain resources for scheduling the first message is greater than the first threshold, and the resource occupied by the third message is the first random access resource, the value of the parameter *K₂* is greater than or equal to the third threshold.

For the first threshold, refer to the descriptions in step 202. Details are not described herein again.

Step 403: The terminal device sends the second message based on the parameter *K₂*.

Correspondingly, the network device receives the second message.

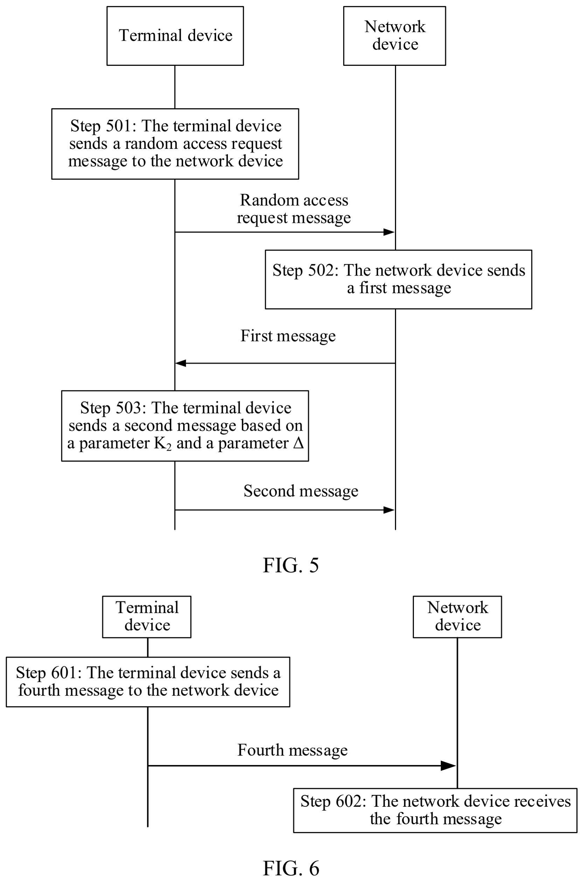

FIG. 5 is a schematic flowchart of a message scheduling method according to an embodiment of this application. The method includes the following steps.

Step 501: A terminal device sends a random access request message to a network device.

Correspondingly, the network device receives the random access request message.

The random access request message may be a message 1 or a message A in a random access procedure.

If a network side configures, for a first-type terminal device, a random access resource used for performing random access, that is, a dedicated random access resource of the first-type terminal device, when the terminal device is the first-type terminal device, the terminal device may send the random access request message by using the dedicated random access resource of the first-type terminal device.

The network device may configure, by using a first system message, the random access resource used by the first-type terminal device to perform random access. A specific process is not described.

This application is described by using an example in which the terminal device accesses the network device in the random access procedure, and the network device schedules a second message by using a first message. If this application is applied to another scenario, step 501 may alternatively not be performed.

Step 502: The network device sends the first message.

Correspondingly, the terminal device receives the first message.

For an implementation of the first message, refer to the descriptions in step 202. Details are not described herein again.

In an implementation, the first message indicates a parameter *K₂*, and the parameter *K₂* and a parameter Δ are for determining an interval between the first message and the second message in time domain. The parameter *K₂* is a parameter in a time domain resource allocation set, and the time domain resource allocation set includes a plurality of values of the parameter *K₂*. For specific content of the time domain resource allocation set, refer to the foregoing Table 1. In other words, the time domain resource allocation set herein may be the same as the second time domain resource allocation set in the foregoing procedure. Details are not described herein again.

For details about how the first message indicates the parameter *K₂*, refer to the descriptions in step 402. Details are not described herein again.

In an implementation, the interval determined based on the parameter *K₂* and the parameter Δ is greater than or equal to a second threshold. The second threshold is a minimum time interval between a last symbol of a PDSCH that carries the first message and a 1^{st} symbol of a PUSCH that carries the second message. For example, for the first-type terminal device, the second threshold is Nt,1+Nt,2+0.5+X. For a second-type terminal device, the second threshold is Nt,1+Nt,2+0.5.

A value of X may be predefined or configured by the network device. In an implementation, when a subcarrier spacing of the PUSCH that carries the second message is 15 kHz, the value of X is 0.5 ms; or when a subcarrier spacing of the PUSCH that carries the second message is 30 kHz, the value of X is 0.25 ms.

In an implementation, when a subcarrier spacing of the PUSCH that carries the second message is 15 kHz, the value of X is 1 ms; or when a subcarrier spacing of the PUSCH that carries the second message is 30 kHz, the value of X is 0.5 ms.

The interval determined based on the parameter *K₂* and the parameter Δ may be equal to *K₂+Δ-*1*.*

In an implementation, if the terminal device is the first-type terminal device, or if a preset condition is met, duration corresponding to *K₂+*Δ*-*1 is greater than or equal to duration corresponding to Nt,1+Nt,2+0.5+X. If the terminal device is the second-type terminal device, or if a preset condition is not met, duration corresponding to *K₂+*Δ*-*1 is greater than or equal to duration corresponding to Nt,1+Nt,2+0.5.

In an implementation, when a preset condition is met, a value of the parameter Δ is equal to a first value; or when a preset condition is not met, a value of the parameter Δ is equal to a second value. The first value is greater than the second value, and there is a correspondence between the parameter Δ and a subcarrier spacing of a channel on which the first message is located. The first value and the second value may be predefined, or may be configured by the network device. When the first value and the second value correspond to a same subcarrier spacing, the first value is greater than the second value.

Alternatively, the first value may be a sum of the second value and a preset value. The preset value is an integer greater than 0. The preset value may be predefined, or may be configured by the network device.

In an implementation, when the preset condition is met, and the subcarrier spacing of the channel on which the first message is located is 15 kHz or 30 kHz, the first value is greater than or equal to 4. When the preset condition is not met, and when the subcarrier spacing of the channel on which the first message is located is 15 kHz, the second value is 2; or when the subcarrier spacing of the channel on which the first message is located is 30 kHz, the second value is 3.

For example, when the preset condition is met, the value of the parameter Δ may be shown in Table 9.

**Table 9**

| *µ_{PUSCH}* | Parameter Δ |
|---|---|
| 0 | 4 |
| 1 | 4 |

When the preset condition is not met, the value of the parameter Δ may be shown in the foregoing Table 3.

In an implementation, for the network device, the preset condition includes at least one of the following:

A quantity of frequency domain resources for scheduling the first message is greater than a first threshold;
a resource occupied by a third message is a first random access resource, the third message is a message before the first message, and the third message is from the terminal device, where for example, the third message is the random access request message; or
a resource occupied by a third message is not a first random access resource.

In an implementation, for the terminal device, the preset condition includes at least one of the following:

A quantity of frequency domain resources for scheduling the first message is greater than a first threshold;
the first system message indicates the random access resource used by the first-type terminal device to perform random access (referred to as a first random access resource for short below), and the first system message is from the network device; or
the first system message does not indicate a first random access resource.

For example, when the quantity of frequency domain resources for scheduling the first message is greater than the first threshold, or when the first system message indicates the first random access resource, or the resource occupied by the third message is the random access resource used by the first-type terminal device to perform random access, the value of the parameter Δ is equal to the first value.

For example, when the quantity of frequency domain resources for scheduling the first message is less than or equal to the first threshold, or the first system message does not indicate the first random access resource, the value of the parameter Δ is equal to the second value.

For example, when the quantity of frequency domain resources for scheduling the first message is greater than the first threshold, and the first system message indicates the first random access resource, the value of the parameter Δ is equal to the first value.

For example, when the quantity of frequency domain resources for scheduling the first message is less than or equal to the first threshold, or the first system message does not indicate the first random access resource, the value of the parameter Δ is equal to the second value.

For the first threshold, refer to the descriptions in step 202. Details are not described herein again.

Step 503: The terminal device sends the second message based on the parameter *K₂* and the parameter Δ.

Correspondingly, the network device receives the second message.

In this application, if the terminal device is the first-type terminal device, the terminal device may further indicate, to the network device by using a logical channel identifier, that the terminal device is the first-type terminal device. In other words, regardless of whether the first random access resource is configured or whether a second random access resource is configured, the first-type terminal device is identified by using a dedicated first logical channel identifier and/or a dedicated second logical channel identifier. The first random access resource may alternatively be a dedicated random access resource of the first-type terminal device, and the second random access resource may alternatively be a dedicated random access resource of the second-type terminal device. For details, refer to the following descriptions.

FIG. 6 is a schematic flowchart of an access method according to an embodiment of this application.

Step 601: A terminal device sends a fourth message to a network device.

Step 602: The network device receives the fourth message.

In an implementation, the fourth message is a message 3 in a random access procedure.

In an implementation, there is a correspondence between a first-type terminal device, a first logical channel identifier, and a second logical channel identifier. The correspondence is predefined, preconfigured, or configured by the network device.

For example, values of the first logical channel identifier and the second logical channel identifier may each be one of 37 to 42. For example, the value of the first logical channel identifier is 37, and the value of the second logical channel identifier is 38.

When the terminal device is the first-type terminal device, the fourth message sent by the terminal device includes the first logical channel identifier or the second logical channel identifier. If receiving the fourth message including the first logical channel identifier or the second logical channel identifier, the network device determines that the terminal device is the first-type terminal device.

In a first case, if a dedicated random access resource of the first-type terminal device is configured, and the terminal device is the first-type terminal device, the sent fourth message includes the first logical channel identifier or the second logical channel identifier.

The first-type terminal device is identified by using a dedicated first logical channel identifier and/or a dedicated second logical channel identifier.

In a second case, if a dedicated random access resource of the first-type terminal device is not configured, a dedicated random access resource dedicated of a second-type terminal device is configured, and the terminal device is the first-type terminal device, the sent fourth message includes the first logical channel identifier or the second logical channel identifier. The first-type terminal device is identified by using a dedicated first logical channel identifier and/or a dedicated second logical channel identifier.

In a third case, if a dedicated random access resource of the first-type terminal device is not configured, a dedicated random access resource of a second-type terminal device is not configured, and the terminal device is the first-type terminal device, the sent fourth message includes the first logical channel identifier or the second logical channel identifier. The first-type terminal device is identified by using a dedicated first logical channel identifier and/or a dedicated second logical channel identifier.

In this application, in a possible implementation, the network device may further send first indication information or second indication information.

Correspondingly, the terminal device receives the first indication information or the second indication information from the network device.

The first indication information indicates the terminal device to report first capability information, and the second indication information indicates the terminal device to report second capability information.

In another possible implementation, the terminal device actively sends first capability information or second capability information to the network device without considering whether the terminal device receives first indication information or second indication information from the network device.

The terminal device sends the first capability information or the second capability information to the network device. The first capability information indicates that the terminal device has a first capability, and the second capability information indicates that the terminal device has a second capability.

Correspondingly, the network device receives the first capability information or the second capability information from the terminal device.

The first capability information or the second capability information may be indicated by using any one of the following messages: a message 1 (message 1, Msgl) in a random access procedure, a message A (message A, MsgA) in the random access procedure, a message 3 (message 3, Msg3) in the random access procedure, and radio resource control (radio resource control, RRC) signaling. Random access types corresponding to the message 1 and the message 3 are 4-step random access, and a random access type corresponding to the message A is 2-step random access.

In this embodiment of this application, when the first capability information or the second capability information is indicated based on the message 3, there is a correspondence between a capability of the terminal device and a logical channel identifier (Logical channel identifier, LCID). To be specific, the first capability corresponds to the first logical channel identifier, and the second capability corresponds to the second logical channel identifier. The correspondence is predefined, preconfigured, or configured by the network device. The first logical channel identifier is different from the second logical channel identifier.

For example, the first capability information may be the first logical channel identifier corresponding to the first capability, and the second capability information may be the second logical channel identifier corresponding to the second capability. A value of the first logical channel identifier may be one of 37 to 42; and a value of the second logical channel identifier may be one of 37 to 42.

When the capability of the terminal device is the first capability, the first capability information included in the message 3 sent by the terminal device is the first logical channel identifier. When receiving the message 3 including the first logical channel identifier, the network device determines that the terminal device is a first-type terminal device having the first capability.

When the capability of the terminal device is the second capability, the second capability information included in the message 3 sent by the terminal device is the second logical channel identifier. When receiving the message 3 including the second logical channel identifier, the network device determines that the terminal device is a first-type terminal device having the second capability.

For example, the value of the first logical channel identifier is 37, and the value of the second logical channel identifier is 38.

When the capability of the terminal device is the first capability, a logical channel identifier included in the message 3 sent by the terminal device is 37. When receiving the message 3 including the logical channel identifier being 37, the network device determines that the terminal device is the first-type terminal device having the first capability.

When the capability of the terminal device is the second capability, a logical channel identifier included in the message 3 sent by the terminal device is 38. When receiving the message 3 including the logical channel identifier being 38, the network device determines that the terminal device is the first-type terminal device having the second capability.

In this embodiment of this application, when the first capability information or the second capability information is indicated based on the message 1 or the message A, there is a correspondence between a capability of the terminal device and a transmission resource for the message 1 or the message A. In other words, the first capability corresponds to a first transmission resource, and the second capability corresponds to a second transmission resource. The correspondence is predefined, preconfigured, or configured by the network device.

The transmission resource includes one or more of the following: a physical random access channel (physical random access channel, PRACH) time domain resource, a PRACH frequency domain resource, a PRACH code domain resource, a PRACH transmission opportunity, and a preamble (preamble) sequence.

If the capability of the terminal device is the first capability, that the terminal device has the first capability is indicated based on the first transmission resource. The first transmission resource may be an existing transmission resource for the message 1 or the message A.

If the capability of the terminal device is the second capability, that the terminal device has the second capability is indicated based on the second transmission resource. The second transmission resource may be a newly defined transmission resource for transmitting the message 1 or the message A.

For example, when the transmission resource is the preamble sequence, currently, a preamble sequence 1 to a preamble sequence 64 are defined as a transmission resource, and the first transmission resource is the existing transmission resource for the message 1 or the message A. Therefore, the first transmission resource includes the preamble sequence 1 to the preamble sequence 64. The second transmission resource is the newly defined transmission resource for transmitting the message 1 or the message A. Therefore, the second transmission resource may include a preamble sequence 65 to a preamble sequence 128.

The first capability information is a preamble sequence sent by the terminal device. The message 1 or the message A sent by the terminal device includes one of the preamble sequence 1 to the preamble sequence 64, indicating that the capability of the terminal device is the first capability.

The second capability information may also be a preamble sequence sent by the terminal device. The message 1 or the message A sent by the terminal device includes one of the preamble sequence 65 to the preamble sequence 128, indicating that the capability of the terminal device is the second capability.

It should be understood that the correspondence between the capability of the terminal device and the transmission resource for the message 1 or the message A may be predefined or preconfigured, or may be configured by the network device.

In the foregoing method, a type or the capability of the terminal device is indicated in advance in an initial access process, so that the network device can schedule, for the terminal device based on the type or the capability of the terminal device, a resource that matches the type or the capability of the terminal device, to improve resource utilization and system efficiency.

The foregoing method procedures may be independently implemented, or may be implemented in combination. This is not limited in this application.

In the foregoing embodiments provided in this application, the methods provided in embodiments of this application are separately described from a perspective of interaction between the devices. To implement functions in the method provided in embodiments of this application, the network device or the terminal device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In this embodiment of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

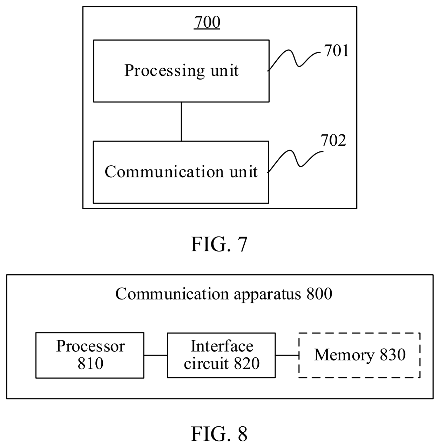

Same as the foregoing concept, as shown in FIG. 7, an embodiment of this application further provides a communication apparatus 700, configured to implement a function of the network device or the terminal device in the foregoing method. For example, the apparatus may be a software module or a chip system. In this embodiment of this application, the chip system may include a chip, or may include a chip and another discrete component. The communication apparatus 700 may include a processing unit 701 and a communication unit 702.

In embodiments of this application, the processing unit may also be referred to as a processor, a processing board, a processing module, a processing apparatus, or the like. The communication unit may also be referred to as a transceiver, a transceiver machine, a transceiver apparatus, a transceiver unit, or the like. The communication unit may include a sending unit and/or a receiving unit, configured to perform sending and receiving steps of the network device or the terminal device in the foregoing method embodiments.

The following describes in detail communication apparatuses provided in embodiments of this application with reference to FIG. 7 and FIG. 8. It should be understood that descriptions of apparatus embodiments correspond to the descriptions of the method embodiments. Therefore, for content that is not described in detail, refer to the foregoing method embodiments. For brevity, details are not described herein again.

In an implementation, the communication apparatus 700 may perform the following functions:

The processing unit is configured to determine a target time domain resource allocation set, where the target time domain resource allocation set is a first time domain resource allocation set or a second time domain resource allocation set.

The communication unit is configured to receive a first message, where the first message indicates a first parameter, the first parameter is for determining an interval between the first message and a second message in time domain, and the first parameter is a parameter in the target time domain resource allocation set; and send the second message based on the first parameter.

In an implementation, the communication apparatus 700 may perform the following functions:

The processing unit is configured to determine a target time domain resource allocation set, where the target time domain resource allocation set is a first time domain resource allocation set or a second time domain resource allocation set.

The communication unit is configured to send a first message, where the first message indicates a first parameter, the first parameter is for determining an interval between the first message and a second message in time domain, and the first parameter is a parameter in the target time domain resource allocation set; and receive the second message.

In an implementation, the communication apparatus 700 may perform the following functions:

The communication unit is configured to receive a first message, where the first message indicates a parameter *K₂*, the parameter *K₂* is for determining an interval between the first message and a second message in time domain, and when a preset condition is met, a value of the parameter *K₂* is greater than or equal to a third threshold.

The processing unit is configured to send the second message based on the parameter *K₂* by using the communication unit.

In an implementation, the communication apparatus 700 may perform the following functions:

The processing unit is configured to send a first message by using the communication unit, where the first message indicates a parameter *K₂*, the parameter *K₂* is for determining an interval between the first message and a second message in time domain, and when a preset condition is met, a value of the parameter *K₂* is greater than or equal to a third threshold.

The processing unit is configured to receive the second message by using the communication unit.

In an implementation, the communication apparatus 700 may perform the following functions:

The processing unit is configured to receive a first message by using the communication unit, where the first message indicates a parameter *K₂*, and the parameter *K₂* and a parameter Δ are for determining an interval between the first message and a second message in time domain. When a preset condition is met, a value of the parameter Δ is equal to a first value, or when a preset condition is not met, a value of the parameter Δ is equal to a second value. The first value is greater than a second value, and there is a correspondence between the parameter Δ and a subcarrier spacing of a channel on which the first message is located.

The processing unit is configured to send the second message based on the parameter *K₂* and the parameter Δ by using the communication unit.

In an implementation, the communication apparatus 700 may perform the following functions:

The processing unit is configured to send a first message by using the communication unit, where the first message indicates a parameter *K₂*, and the parameter *K₂* and a parameter Δ are for determining an interval between the first message and a second message in time domain. When a preset condition is met, a value of the parameter Δ is equal to a first value, or when a preset condition is not met, a value of the parameter Δ is equal to a second value. The first value is greater than a second value, and there is a correspondence between the parameter Δ and a subcarrier spacing of a channel on which the first message is located.

The processing unit is configured to receive the second message by using the communication unit.

The foregoing is merely an example. The processing unit 701 and the communication unit 702 may further perform other functions. For more detailed descriptions, refer to the related descriptions in the foregoing method embodiments. Details are not described herein.

FIG. 8 shows a communication apparatus 800 according to an embodiment of this application. The apparatus shown in FIG. 8 may be an implementation of a hardware circuit of the apparatus shown in FIG. 7. The communication apparatus is applicable to the foregoing flowcharts, and performs functions of the network device or the terminal device in the foregoing method embodiments. For ease of description, FIG. 8 shows only main components of the communication apparatus.

As shown in FIG. 8, the communication apparatus 800 includes a processor 810 and an interface circuit 820. The processor 810 and the interface circuit 820 are coupled to each other. It may be understood that the interface circuit 820 may be a transceiver or an input/output interface.

In an implementation, the communication apparatus 800 may further include a memory 830, configured to: store instructions executed by the processor 810, or store input data needed by the processor 810 to run the instructions, or store data generated after the processor 810 runs the instructions.

When the communication apparatus 800 is configured to implement the foregoing methods, the processor 810 is configured to implement a function of the processing unit 701, and the interface circuit 820 is configured to implement a function of the communication unit 702.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The memory in embodiments of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A message scheduling method, comprising:
determining a target time domain resource allocation set, wherein the target time domain resource allocation set is a first time domain resource allocation set or a second time domain resource allocation set;
receiving a first message, wherein the first message indicates a first parameter, the first parameter is for determining an interval between the first message and a second message in time domain, and the first parameter is a parameter in the target time domain resource allocation set; and
sending the second message based on the first parameter.

2. The method according to claim 1, wherein determining the target time domain resource allocation set comprises:
when a preset condition is met, determining the first time domain resource allocation set as the target time domain resource allocation set; or
when a preset condition is not met, determining the second time domain resource allocation set as the target time domain resource allocation set, wherein
the preset condition comprises at least one of the following:
a quantity of frequency domain resources for scheduling the first message is greater than a first threshold; or
a first system message indicates a random access resource used by a first-type terminal device to perform random access, and the first system message is from a network device.

3. The method according to claim 2, wherein
when a subcarrier spacing of a channel on which the first message is located is 15 kHz, the first threshold is 25 resource blocks;
when a subcarrier spacing of a channel on which the first message is located is 30 kHz, the first threshold is 12 resource blocks; or
when a subcarrier spacing of a channel on which the first message is located is 60 kHz, the first threshold is six resource blocks.

4. The method according to any one of claims 1 to 3, wherein the first time domain resource allocation set comprises N values of a parameter *K₂*, each of the N values is greater than or equal to 2, and N is an integer greater than 0.

5. The method according to claim 4, wherein when the value of the parameter *K₂* is equal to 2, a channel mapping mode of a PUSCH on which the second message is located is a type B, and an index *S* of a start symbol of the second message is greater than or equal to 3; or
when the value of the parameter *K₂* is greater than 2, a channel mapping mode of a physical uplink shared channel PUSCH on which the second message is located is a type A or a type B, and an index *S* of a start symbol of the second message is greater than or equal to 0, or a value range of resource indication value RIV code of an index S of a start symbol of the second message and a length *L* of symbols occupied by the second message is 0 to 127.

6. The method according to any one of claims 1 to 5, wherein when the target time domain resource allocation set is the first time domain resource allocation set, the interval determined based on the first parameter is greater than or equal to a second threshold, the second threshold is a minimum time interval between a last symbol of a physical downlink shared channel PDSCH that carries the first message and a 1^{st} symbol of the physical uplink shared channel PUSCH that carries the second message, and the second threshold corresponds to the first-type terminal device.

7. The method according to any one of claims 1 to 6, wherein at least one of the first time domain resource allocation set and the second time domain resource allocation set is from the network device.

8. The method according to any one of claims 1 to 7, wherein the first message is a random access response message or a fallback random access response message; and
the second message is a message 3 in a random access procedure.

9. A message scheduling method, comprising:
determining a target time domain resource allocation set, wherein the target time domain resource allocation set is a first time domain resource allocation set or a second time domain resource allocation set;
sending a first message, wherein the first message indicates a first parameter, the first parameter is for determining an interval between the first message and a second message in time domain, and the first parameter is a parameter in the target time domain resource allocation set; and
receiving the second message.

10. The method according to claim 9, wherein determining the target time domain resource allocation set comprises:
when a preset condition is met, determining the first time domain resource allocation set as the target time domain resource allocation set; or
when a preset condition is not met, determining the second time domain resource allocation set as the target time domain resource allocation set, wherein
the preset condition comprises at least one of the following:
a quantity of frequency domain resources for scheduling the first message is greater than a first threshold; or
a resource occupied by a third message is a random access resource used by a first-type terminal device to perform random access, the third message is a message before the first message, and the third message is from the terminal device.

11. The method according to claim 10, wherein
when a subcarrier spacing of a channel on which the first message is located is 15 kHz, the first threshold is 25 resource blocks;
when a subcarrier spacing of a channel on which the first message is located is 30 kHz, the first threshold is 12 resource blocks; or
when a subcarrier spacing of a channel on which the first message is located is 60 kHz, the first threshold is six resource blocks.

12. The method according to any one of claims 9 to 11, wherein the first time domain resource allocation set comprises N values of a parameter *K₂*, each of the N values is greater than or equal to 2, and N is an integer greater than 0.

13. The method according to claim 12, wherein when the value of the parameter *K₂* is equal to 2, a channel mapping mode of a PUSCH on which the second message is located is a type B, and an index *S* of a start symbol of the second message is greater than or equal to 3; or
when the value of the parameter *K₂* is greater than 2, a channel mapping mode of a PUSCH on which the second message is located is a type A or a type B, and an index *S* of a start symbol of the second message is greater than or equal to 0, or a value range of resource indication value RIV code of an index *S* of a start symbol of the second message and a length *L* of symbols occupied by the second message is 0 to 127.

14. The method according to any one of claims 9 to 13, wherein when the target time domain resource allocation set is the first time domain resource allocation set, the interval determined based on the first parameter is greater than or equal to a second threshold, the second threshold is a minimum time interval between a last symbol of a PDSCH that carries the first message and a 1^{st} symbol of the PUSCH that carries the second message, and the second threshold corresponds to the first-type terminal device.

15. The method according to any one of claims 9 to 14, wherein at least one of the first time domain resource allocation set and the second time domain resource allocation set is from the network device.

16. The method according to any one of claims 9 to 15, wherein the first message is a random access response message or a fallback random access response message; and
the second message is a message 3 in a random access procedure.

17. A communication apparatus, comprising:
a processing unit, configured to determine a target time domain resource allocation set, wherein the target time domain resource allocation set is a first time domain resource allocation set or a second time domain resource allocation set; and
a communication unit, configured to receive a first message, wherein the first message indicates a first parameter, the first parameter is for determining an interval between the first message and a second message in time domain, and the first parameter is a parameter in the target time domain resource allocation set; and send the second message based on the first parameter.

18. The apparatus according to claim 17, wherein the processing unit is specifically configured to:
when a preset condition is met, determine the first time domain resource allocation set as the target time domain resource allocation set; or
when a preset condition is not met, determine the second time domain resource allocation set as the target time domain resource allocation set, wherein
the preset condition comprises at least one of the following:
a quantity of frequency domain resources for scheduling the first message is greater than a first threshold; or
a first system message indicates a random access resource used by a first-type terminal device to perform random access, and the first system message is from a network device.

19. The apparatus according to claim 18, wherein
when a subcarrier spacing of a channel on which the first message is located is 15 kHz, the first threshold is 25 resource blocks;
when a subcarrier spacing of a channel on which the first message is located is 30 kHz, the first threshold is 12 resource blocks; or
when a subcarrier spacing of a channel on which the first message is located is 60 kHz, the first threshold is six resource blocks.

20. The apparatus according to any one of claims 17 to 19, wherein the first time domain resource allocation set comprises N values of a parameter *K₂*, each of the N values is greater than or equal to 2, and N is an integer greater than 0.

21. The apparatus according to claim 20, wherein when the value of the parameter *K₂* is equal to 2, a channel mapping mode of a PUSCH on which the second message is located is a type B, and an index *S* of a start symbol of the second message is greater than or equal to 3; or
when the value of the parameter *K₂* is greater than 2, a channel mapping mode of a physical uplink shared channel PUSCH on which the second message is located is a type A or a type B, and an index *S* of a start symbol of the second message is greater than or equal to 0, or a value range of resource indication value RIV code of an index *S* of a start symbol of the second message and a length *L* of symbols occupied by the second message is 0 to 127.

22. The apparatus according to any one of claims 17 to 21, wherein when the target time domain resource allocation set is the first time domain resource allocation set, the interval determined based on the first parameter is greater than or equal to a second threshold, the second threshold is a minimum time interval between a last symbol of a physical downlink shared channel PDSCH that carries the first message and a 1^{st} symbol of the physical uplink shared channel PUSCH that carries the second message, and the second threshold corresponds to the first-type terminal device.

23. The apparatus according to any one of claims 17 to 22, wherein at least one of the first time domain resource allocation set and the second time domain resource allocation set is from the network device.

24. The apparatus according to any one of claims 17 to 23, wherein the first message is a random access response message or a fallback random access response message; and
the second message is a message 3 in a random access procedure.

25. A communication apparatus, comprising:
a processing unit, configured to determine a target time domain resource allocation set, wherein the target time domain resource allocation set is a first time domain resource allocation set or a second time domain resource allocation set; and
a communication unit, configured to send a first message, wherein the first message indicates a first parameter, the first parameter is for determining an interval between the first message and a second message in time domain, and the first parameter is a parameter in the target time domain resource allocation set; and receive the second message.

26. The apparatus according to claim 25, wherein the processing unit is specifically configured to:
when a preset condition is met, determine the first time domain resource allocation set as the target time domain resource allocation set; or
when a preset condition is not met, determine the second time domain resource allocation set as the target time domain resource allocation set, wherein
the preset condition comprises at least one of the following:
a quantity of frequency domain resources for scheduling the first message is greater than a first threshold; or
a resource occupied by a third message is a random access resource used by a first-type terminal device to perform random access, the third message is a message before the first message, and the third message is from the terminal device.

27. The apparatus according to claim 26, wherein
when a subcarrier spacing of a channel on which the first message is located is 15 kHz, the first threshold is 25 resource blocks;
when a subcarrier spacing of a channel on which the first message is located is 30 kHz, the first threshold is 12 resource blocks; or
when a subcarrier spacing of a channel on which the first message is located is 60 kHz, the first threshold is six resource blocks.

28. The apparatus according to any one of claims 25 to 27, wherein the first time domain resource allocation set comprises N values of a parameter *K₂*, each of the N values is greater than or equal to 2, and N is an integer greater than 0.

29. The apparatus according to claim 27, wherein when the value of the parameter *K₂* is equal to 2, a channel mapping mode of a PUSCH on which the second message is located is a type B, and an index *S* of a start symbol of the second message is greater than or equal to 3; or
when the value of the parameter *K₂* is greater than 2, a channel mapping mode of a PUSCH on which the second message is located is a type A or a type B, and an index S of a start symbol of the second message is greater than or equal to 0, or a value range of resource indication value RIV code of an index *S* of a start symbol of the second message and a length *L* of symbols occupied by the second message is 0 to 127.

30. The apparatus according to any one of claims 25 to 29, wherein when the target time domain resource allocation set is the first time domain resource allocation set, the interval determined based on the first parameter is greater than or equal to a second threshold, the second threshold is a minimum time interval between a last symbol of a PDSCH that carries the first message and a 1^{st} symbol of the PUSCH that carries the second message, and the second threshold corresponds to the first-type terminal device.

31. The apparatus according to any one of claims 25 to 30, wherein at least one of the first time domain resource allocation set and the second time domain resource allocation set is from the network device.

32. The apparatus according to any one of claims 25 to 31, wherein the first message is a random access response message or a fallback random access response message; and
the second message is a message 3 in a random access procedure.

33. A computer program product, comprising instructions, wherein when the instructions are executed, the method according to any one of claims 1 to 16 is implemented.

34. A chip, comprising a processor, wherein the processor is coupled to a memory, and is configured to execute a computer program or instructions stored in the memory, to cause the chip to implement the method according to any one of claims 1 to 16.

35. A computer-readable storage medium, wherein the storage medium stores a computer program or instructions, and when the computer program or the instructions are executed by a communication apparatus, the method according to any one of claims 1 to 16 is implemented.

36. A communication system, comprising a terminal device configured to perform the method according to any one of claims 1 to 8, and a network device configured to perform the method according to any one of claims 9 to 16.
